# EUROPÄISCHE PATENTSCHRIFT

(11) **EP 4 153 391 B1**
(45) Veröffentlichungstag und Bekanntmachung des Hinweises auf die Patenterteilung: **21.02.2024**
(21) Anmeldenummer: 21726618.8
(22) Anmeldetag: 12.05.2021
(51) Int. Cl.: D04H 1/70, B27N 3/14, D21F 1/18, B65G 69/04

(54) **RÜTTELVORRICHTUNG FÜR EINE ANLAGE ZUR HERSTELLUNG EINER VLIESSTOFFBAHN**
VIBRATING DEVICE FOR AN INSTALLATION FOR PRODUCING A NONWOVEN FABRIC WEB
DISPOSITIF VIBRANT POUR UNE INSTALLATION PERMETTANT DE PRODUIRE UNE BANDE DE TISSU NON TISSÉ

(30) Priorität: 18.05.2020 DE 102020113379
(43) Veröffentlichungstag der Anmeldung: 29.03.2023
(73) Patentinhaber: Voith Patent GmbH, 89522 Heidenheim (DE)
(72) Erfinder: BÖGERSHAUSEN, Andreas, 47877 Willich (DE); POOS, Alexander, 47829 Krefeld (DE)
(74) Vertreter: Voith Patent GmbH - Patentabteilung
(86) Internationale Anmeldenummer: PCT/EP2021/062602
(87) Internationale Veröffentlichungsnummer: WO 2021/233756

(56) Entgegenhaltungen:
- DE-A1- 2 534 998
- DE-A1-102010 039 198
- US-A- 1 841 702
- K P Shah: "Construction, working and maintenance of electric vibrators and vibrating screens", , 31. März 2018 (2018-03-31), XP55530973, United States Gefunden im Internet: URL:http://practicalmaintenance.net/wp-con tent/uploads/Construction-Working-and-Main tenance-of-Vibrators-and-Vibrating-Screens .pdf [gefunden am 2018-12-06]

## Beschreibung

Die vorliegende Erfindung betrifft eine Rüttelvorrichtung für eine Anlage zur Herstellung einer Vliesstoffbahn, welche ausgebildet ist, in Maschinenquerrichtung unter einem Transportband für Fasern, aus denen die Vliesstoffbahn hergestellt wird, positioniert zu werden und das Transportband mit den darauf transportierten Fasern in Schwingungen zu versetzen. Ferner betrifft die Erfindung eine entsprechende Anlage mit einer solchen Rüttelvorrichtung, sowie ein Verfahren zur Herstellung einer Vliesstoffbahn unter Verwendung einer solchen Anlage.

Derartige Rüttelvorrichtungen sind aus dem Stand der Technik bereits bekannt. Sie werden verwendet, um die Fasern, wie zum Beispiel Glasfasern, auf dem Transportband neu auszurichten, insbesondere gleichmäßiger auf dem Transportband zu verteilen. Hierzu weisen bisher bekannte Rüttelvorrichtungen eine metallische Stange auf, die sich in Maschinenquerrichtung, d.h. quer zur Transportrichtung der Fasern auf dem Transportband, erstreckt. Die Stange ist an einem ihrer beiden Längsenden mit einem Vibrationsmotor verbunden, welcher im Betrieb die Stange in eine ungleichmäßige Taumelbewegung versetzt. Die Stange überträgt durch einen permanenten oder zeitlich unterbrochenen Kontakt mit der Unterseite des Transportbandes die Vibrationsbewegung auf die auf dem Transportband transportierten Fasern.

Bei passend eingestellter Vibrationsintensität führt die Anregung in Abhängigkeit von dem jeweiligen Produkt dazu, dass sich die Vliesstoffbahn als Ganzes neu auf dem Transportband ausrichtet. Auf diese Weise können Falten in der Vliesstoffbahn vor dem Aushärten des Binders reduziert und somit die Produktqualität gesteigert werden. Daher werden derartige Rütteleinrichtungen in der Regel direkt vor dem Ofeneinlauf und kurz hinter dem letzten Übergabepunkt des vorangegangenen Anlagenteils angeordnet. Übergabepunkte sind allgemein kritisch in Bezug auf Faltenbildung im Produkt.

Problematisch ist dabei, dass die Vibrationsbewegungen in der Regel mit zunehmender Entfernung von dem Vibrationsmotor immer kleiner werden, so dass die Vibrationsbewegung über die Breite des Transportbandes gesehen ungleichmäßig ist.

Zur Kompensation werden in der Praxis mehrere Rüttelvorrichtungen hintereinander verwendet. Dabei ist bei aufeinanderfolgenden Rüttelvorrichtungen der Unwuchtmotor jeweils an entgegengesetzten Längsenden der Stange montiert.

Nachteilig an dieser Lösung ist neben dem erhöhten Platzbedarf, dass diese Anordnung von hintereinander angeordneten Rüttelvorrichtungen im Betrieb zu einer unsymmetrischen, schwellenden Zuglast des Transportbandes führt. Zudem kommt es durch den kleinflächigen, harten Kontakt zwischen der Stange und der Unterseite des Transportbands zu einem merklichen Verschleiß der Kontaktpartner. Schließlich erschwert die undefinierte Bewegung der Stange bzw. Stangen eine gezielte Einstellung der Vibrationsintensität, etwa durch eine Verlagerung von Unwuchtgewichten in radialer Richtung zur Drehachse, um damit die Produktqualität gezielt zu beeinflussen.

US 1,841,702 offenbart eine Schüttelvorrichtung, die Vibrationsimpulse in vertikaler Richtung auf dem Transportband von unten ausüben. Hierzu wird mit einem Hammer von unten auf ein Brett geschlagen, welches sich unterhalb des Transportbands in Maschinenquerrichtung erstreckt.

Es ist Aufgabe der vorliegenden Erfindung, die zuvor genannten Probleme zu lösen oder zumindest zu verringern. Insbesondere soll eine möglichst gleichmäßige Vibrationsbewegung über die gesamte Breite des Transportbandes erzielt werden, wobei das Transportband möglichst geringen Beanspruchungen ausgesetzt werden soll. Auch eine gezielte Beeinflussung der Produktqualität durch die Rüttelvorrichtung soll vorzugsweise ermöglicht werden.

Diese Aufgabe wird durch die Merkmale der unabhängigen Ansprüche gelöst. Vorteilhafte Weiterbildungen sind Gegenstand der Unteransprüche.

Erfindungsgemäß wird die Aufgabe dadurch gelöst, dass die eingangs beschriebene, gattungsgemäße Rüttelvorrichtung einen Balken umfasst, dessen Oberseite zumindest temporär mit einer Unterseite des Transportbandes in Kontakt bringbar ist, wobei der Balken derart gelagert ist und/oder der Balken durch die Rüttelvorrichtung nur derart angeregt wird bzw. anregbar ist, dass er im Wesentlichen keine Bewegungen in Maschinenrichtung ausführt bzw. zulässt.

Durch diese eingeschränkte Bewegung bzw. Bewegungsfreiheit des Balkens kann eine unkontrollierte Taumelverbindung, wie im Stand der Technik, vermieden werden, so dass es zu einer wesentlich gleichmäßigeren Vibrationsanregung der Fasern über die gesamte Breite des Transportbandes kommt. Es ist nicht mehr notwendig, mehrere solcher Rüttelvorrichtungen hintereinander anzuordnen, was Kosten und Bauraum spart. Der Balken kann - im Gegensatz zu der ansonsten verwendeten Stange mit relativ kleinem Querschnitt - eine größere Kontaktfläche zur Unterseite des Transportbandes bereitstellen, so dass sich die von dem Balken auf das Transportband übertragenen Druckkräfte auf eine größere Fläche verteilen und somit der Verschleiß reduziert wird. Zudem lässt sich jetzt durch die kontrollierte Bewegung des Balkens auch gezielt Einfluss auf die Produktqualität nehmen, wie nachfolgend noch näher ausgeführt wird.

Um keine nennenswerte Kräfte in Maschinenrichtung auf die Lagerung des Balkens zu erzeugen, welche andernfalls zu einem Verschleiß führen könnten, ist es wichtig, wenn die Rüttelvorrichtung als solches ausgebildet ist, im Wesentlichen ausschließlich Kräfte auf den Balken auszuüben, welche orthogonal zur Unterseite des Transportbandes orientiert sind. Hierzu sind später noch näher beschriebene Unwuchtgewichte derart angebracht, dass eine "saubere" vertikale Bewegung des Balkens entsteht. Hierzu sind eine symmetrische Anordnung und eine gegensinnige Drehrichtung von paarweise verwendeten Unwuchtmotoren vorteilhaft.

Eine gerade Anzahl von Unwuchtmotoren sind dem Balken zugeordnet. Dabei werden jeweils zwei Unwuchtmotoren mit im Wesentlichen gleicher Frequenz aber gegensinniger Drehrichtung angetrieben. Hierdurch kann erreicht werden, dass sich die von den beiden Unwuchtmotoren auf den Balken übertragenen Kräfte in Richtung quer zum Transportband gegenseitig aufheben und sich der Balken im Wesentlichen ausschließlich in einer Richtung orthogonal zur Unterseite des Transportbandes bewegt. Mit "im Wesentlichen gleicher Frequenz" ist gemeint, dass das die Frequenz nicht zwingend genau übereinstimmen muss. Geringe Frequenzabweichungen sind in der Regel unschädlich, da sich das System einen energetisch stabilen Betriebspunkt sucht und es so zu einer Selbstsynchronisation der beiden Motoren kommt.

Bevorzugt ist es dabei, dass jeweils zwei Unwuchtmotoren hinsichtlich einer Längserstreckung des Balkens in Maschinenquerrichtung im Wesentlichen symmetrisch zu einem Mittelpunkt des Balkens angeordnet sind. Dies führt zu einer gleichmäßigeren Vibrationsanregung und/oder Lagerung des Balkens bezogen auf seine Haupterstreckungs- bzw. Längsrichtung.

Es kann sich entweder der bzw. ein Balken über die gesamte Breite des Transportbandes erstrecken oder es können zwei oder noch mehr Balken hintereinander angeordnet werden, die sich dann gemeinsam über die gesamte Breite des Transportbandes erstrecken. Mit "hintereinander" ist in diesem Zusammenhang eine sequentielle Anordnung der Balken in Maschinenquerrichtung bzw. in Breitenrichtung des Transportbandes gemeint. Bei einer solchen Hintereinander-Anordnung können kleinere Einheiten kostengünstig in großer Stückzahl produziert und dann modulartig zu der benötigten Breite, je nach Anwendungsfall, zusammengesetzt werden. Dabei können die hintereinander angeordneten Balken entweder miteinander verbunden werden, so dass sie gemeinsam eine im Wesentlichen starre Einheit bilden, oder sie können unverbunden und sogar mit geringem Abstand zueinander angeordnet werden. Im ersten Fall erhält man stets eine sehr gleichmäßige Vibrationsanregung über die gesamte Breite des Transportbandes. Im zweiten Fall besteht hingegen die Möglichkeit, gezielt die Vibrationsanregung über die Breite des Transportbandes hinweg unterschiedlich einzustellen.

Ein weiterer Aspekt der vorliegenden Erfindung betrifft eine Anlage zur Herstellung einer Vliesstoffbahn, insbesondere einer Vliesstoffbahn bestehend aus Fasern aus synthetisch erzeugten Polymeren oder industriell erzeugten, anorganischen Fasern, wie zum Beispiel Glas-, Metall-, Mineral-, Keramik- oder Kohlenstofffasern, umfassend ein Transportband für die Fasern, aus denen die Vliesstoffbahn hergestellt wird, sowie eine zuvor beschriebene unter dem Transportband angeordnete Rüttelvorrichtung. Besonders bevorzugt bezieht sich die vorliegende Erfindung auf die Herstellung von Glasvlies.

Insbesondere bei Vliesstoffbahnen aus Fasern aus synthetisch erzeugten Polymeren oder industriell erzeugten, anorganischen Fasern ist eine Rüttelvorrichtung von Vorteil, da sich bei diesen Fasern, anders als Fasern aus natürlichem Zellstoff oder dergleichen - keine Wasserstoffbrückenbindungen ausbilden, so dass diese Fasern in der Regel mittels eine Bindemittels miteinander verbunden werden müssen. Bis das Bindemittel jedoch appliziert und/oder aktiviert wird, liegen die Fasern noch lose beieinander und können daher durch eine entsprechende Rüttelvorrichtung noch effektiv neu ausgerichtet werden.

Die erfindungsgemäße Anlage kann ferner einen Former zum Nasslegen der Fasern auf das Transportband umfassen. Entsprechende Schrägsiebformer sind aus dem Stand der Technik bekannt.

Ein anderer Aspekt der vorliegenden Erfindung betrifft ein Verfahren zur Herstellung einer Vliesstoffbahn, insbesondere einer Vliesstoffbahn bestehend aus Fasern aus synthetisch erzeugten Polymeren oder industriell erzeugten, anorganischen Fasern, wie zum Beispiel Glas-, Metall-, Mineral-, Keramik- oder Kohlenstofffasern, unter Verwendung einer zuvor beschriebenen Anlage, wobei die Fasern auf dem Transportband mittels der Rüttelvorrichtung zumindest teilweise hinsichtlich ihrer Lage und/oder Orientierung neu ausgerichtet werden.

Der Balken wird im Wesentlichen nur in einer Richtung, nämlich der Richtung orthogonal zur Unterseite des Transportbandes, in Vibrationsbewegungen versetzt. Bewegungen in Transportrichtung der Fasern können hingegen durch die Lagerung und/oder Anregung des Balkens gehemmt bzw. vermieden werden.

Bewegungen in Querrichtung des Transportbandes werden zum Beispiel - wie zuvor beschrieben - dadurch gehemmt bzw. vermieden, indem zwei mit dem Balken verbundene Unwuchtmotoren mit im Wesentlichen gleicher Frequenz, jedoch mit gegensinniger Drehrichtung angetrieben werden.

Besonders vorteilhaft ist es, wenn prozesstechnisch nach der Neuausrichtung der Fasern die Fasern miteinander verbunden werden, insbesondere ein Bindemittel derart erwärmt wird, dass es aushärtet, um die Fasern miteinander zu verbinden.

Ferner kann die Vibrationsanregung des Balkens, vorzugsweise unabhängig bezüglich der Amplitude und der Frequenz, verstellbar sein bzw. wird diese verstellt, vorzugsweise durch eine Veränderung der Drehzahl der Unwuchtmotoren, insbesondere in radialer Richtung bezogen auf die Drehachse des Unwuchtmotors, und/oder durch eine Positionsverstellung von den Unwuchtmotoren zugeordneten Unwuchtgewichten. Hierdurch ergibt sich eine Möglichkeit zur definierten Beeinflussung der Produktqualität.

Die Erfindung wird nachfolgend anhand schematischer und nicht maßstabsgetreuer Zeichnung weiter erläutert. Es zeigen:
- Figur 1: ein erstes Ausführungsbeispiel einer erfindungsgemäßen Rüttelvorrichtung und
- Figur 2: ein zweites Ausführungsbeispiel einer erfindungsgemäßen Rüttelvorrichtung.

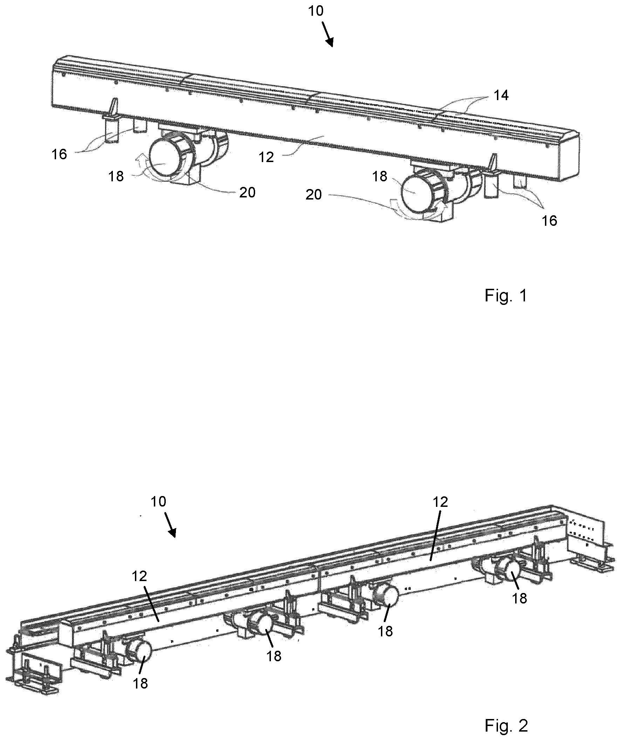

Figur 1 zeigt eine erste beispielhafte Ausführungsform einer erfindungsgemäßen Rüttelvorrichtung 10. Die Rüttelvorrichtung 10 umfasst einen Balken 12, dessen Oberseite mehrere Kontaktelemente 14 aufweist. Die Kontaktelemente 14 können aus einem besonders gut gleitfähigen Material, wie zum Bespiel einem keramischen Material, bestehen bzw. mit einem solchen Material beschichtet sein. Im bestimmungsgemäßen Betrieb der Rüttelvorrichtung 10 gelangen die Kontaktelemente 14 zumindest temporär an die Unterseite eines in Figur 1 nicht dargestellten Transportbandes, um Vibrationen auf das Transportband zu übertragen und somit Fasern, die auf dem Transportsieb transportiert werden, zumindest teilweise neu auszurichten. Hierzu können die Kontaktelemente 14 oben entweder flach bzw. eben ausgebildet sein oder eine geringfügige Wölbung aufweisen, um das Gleiten des Transportsiebs darüber zu erleichtern. Vorteilhaft ist es jedoch, dass die Kontaktfläche nicht zu klein ausgestaltet ist, damit sich die Druckkräfte von dem Balken 12 auf das Transportband auf eine entsprechend große Fläche verteilen können und der Verschleiß an den Kontaktelementen 14 und/oder dem Transportsieb gering ist. Der Balken 12 erstreckt sich vorzugsweise über die gesamte Breite des hier nicht dargestellten Transportbandes.

Der Balken 10 kann durch Balkenlager 16 derart gelagert sein, dass er im Wesentlichen keine Bewegungen in Maschinenrichtung zulässt. Die Maschinenrichtung bezeichnet die Transportrichtung der Fasern auf dem Transportband. Sie verläuft in der Ebene der Kontaktelemente 14 und orthogonal zur Haupt- bzw. Längserstreckungsrichtung des Balkens 12.

Ferner umfasst die erfindungsgemäße Rüttelvorrichtung 10 zwei Unwuchtmotoren 18. Diese sind ausgelegt, um im bestimmungsgemäßen Betrieb der Rüttelvorrichtung 10 mit im Wesentlichen gleicher Drehzahl bzw. Frequenz, jedoch mit entgegengesetzter Drehrichtung, welche durch die Pfeile 20 angedeutet ist, angetrieben zu werden. Die beiden Unwuchtmotoren 18 sind hinsichtlich der Längserstreckung des Balkens 12 in Maschinenquerrichtung im Wesentlichen symmetrisch zu einem Mittelpunkt des Balkens 12 angeordnet sind. Durch dieses Anordnung und diesen Betrieb der beiden Unwuchtmotoren 18 heben sich ihre Vibrationsanregungen in Richtung der Längserstreckung des Balkens 12 gegenseitig auf, wohingegen sich ihre Vibrationsanregungen orthogonal dazu, nämlich in Richtung auf das Transportband zu bzw. von diesem weg, verstärken. Vorzugsweise sind hierzu Unwuchtgewichte in den beiden Unwuchtmotoren 18 in gleicher Winkelstellung zueinander ausgerichtet, d.h. die erreichen ihre höchste bzw. tiefste Stellung im selben Moment. Die Position der Unwuchtgewichte in den Unwuchtmotoren 18 lässt sich radial zur Drehachse verstellen, um die Stärke der Vibrationsanregung gezielt zu ändern. Ebenso kann die Frequenz bzw. Drehzahl, mit der die beiden Unwuchtmotoren 18 angetrieben werden, gezielt eingestellt werden.

Durch die erfindungsgemäße Rüttelvorrichtung 10 kann eine sehr gleichmäßige Neuausrichtung der Fasern auf dem Transportband über dessen gesamte Breite hinweg erfolgen. Zugleich ist der Verschleiß an den Kontaktelemente 14 und dem Transportband sehr gering. Eine gezielte Einstellung der Produktqualität ist möglich. Außerdem reicht eine einzige Rüttelvorrichtung aus, um das gewünschte Ergebnis zu erzielen. Das Anordnen mehrerer solcher Einrichtungen hintereinander, wie es dies aus der bisherigen Praxis bekannt ist, ist nicht notwendig.

Vorzugsweise ist die erfindungsgemäße Rüttelvorrichtung 10 zwischen einer Vorrichtung zum Aufbringen der Fasern auf das Transportband, etwa einem Former, wie einem Schrägsiebformer, und einer Vorrichtung zum Verbinden der Fasern angeordnet, etwa eine Heizvorrichtung zum Aushärten eines die Fasern verbindenden Bindermittels.

Figur 2 zeigt eine zweite beispielhafte Ausführungsform der Erfindungsgemäßen Rüttelvorrichtung 10. Diese unterscheidet sich von der zuvor beschrieben Rüttelvorrichtung 10 gemäß Figur 1 im Wesentlichen nur dadurch, dass zwei Balken 12 mit jeweils zwei Unwuchtmotoren 18 in Maschinenquerrichtung neben- bzw. hintereinander angeordnet sind, um eine größere Breite eines hier ebenfalls nicht dargestellten Transportbandes abzudecken. Insofern wird auf die obige Beschreibung der Rüttelvorrichtung 10 verwiesen.

Die beiden Balken 12 können wahlweise fest miteinander verbunden sein, um eine starre Einheit zu bilden, ober sie können unverbunden sein und einen kleinen Abstand zwischen sich aufweisen. Vorzugsweise werden alle vier Unwuchtmotoren 18 mit im Wesentlichen derselben Frequenz angetrieben, wobei die den Unwuchtmotoren 18 zugeordneten Unwuchtgewichte vorzugsweise alle im selben Moment ihre höchste bzw. tiefste Stellung erreichen. Der Drehsinn von jeweils zwei einem Balken 12 zugeordneten Unwuchtmotoren 18 ist gegensinnig zueinander.

Es sei an dieser Stelle angemerkt, dass natürlich auch mehr als zwei Balken 12 neben- bzw. hintereinander angeordnet werden können, je nach Länge der Balken 12 und breite des Transportbandes. Zudem können auch mehr als zwei Unwuchtmotoren 18 jeweils einem Balken 12 zugeordnet sein. Vorzugsweise ist aber immer eine gerade Anzahl an Unwuchtmotoren 18 jeweils einem Balken 12 zugeordnet.

### Bezugszeichenliste:

- 10: Rüttelvorrichtung
- 12: Balken
- 14: Kontaktelement
- 16: Balkenlager
- 18: Unwuchtmotor
- 20: (Drehrichtungs-)Pfeil

## Patentansprüche

1. Rüttelvorrichtung (10) für eine Anlage zur Herstellung einer Vliesstoffbahn, welche ausgebildet ist, in Maschinenquerrichtung unter einem Transportband für Fasern, aus denen die Vliesstoffbahn hergestellt wird, positioniert zu werden und das Transportband mit den darauf transportierten Fasern in Schwingungen zu versetzen,
wobei die Rüttelvorrichtung (10) einen Balken (12) umfasst, dessen Oberseite zumindest temporär mit einer Unterseite des Transportbandes in Kontakt bringbar ist, wobei der Balken (12) derart gelagert ist und/oder der Balken durch die Rüttelvorrichtung nur derart angeregt wird bzw. anregbar ist, dass er im Wesentlichen keine Bewegungen in Maschinenrichtung ausführt bzw. zulässt, **dadurch gekennzeichnet, dass** dem Balken (12) mehrere Unwuchtmotoren (18) zugeordnet sind, wobei dem Balken (12) eine gerade Anzahl von Unwuchtmotoren (18) zugeordnet sind, und wobei jeweils zwei Unwuchtmotoren (18) mit im Wesentlichen gleicher Frequenz aber gegensinniger Drehrichtung antreibbar sind bzw. angetrieben werden.

2. Rüttelvorrichtung (10) nach Anspruch 1, **dadurch gekennzeichnet, dass** jeweils zwei Unwuchtmotoren (18) hinsichtlich einer Längserstreckung des Balkens (12) in Maschinenquerrichtung im Wesentlichen symmetrisch zu einem Mittelpunkt des Balkens (12) angeordnet sind.

3. Rüttelvorrichtung (10) nach einem der vorhergehenden Ansprüche, **dadurch gekennzeichnet, dass** sich der Balken (12) über die gesamte Breite des Transportbandes erstreckt.

4. Rüttelvorrichtung nach einem der Ansprüche 1 oder 2, **dadurch gekennzeichnet, dass** mehrere Balken (12) hintereinander angeordnet sind, die sich zusammen über die gesamte Breite des Transportbandes erstrecken.

5. Anlage zur Herstellung einer Vliesstoffbahn, insbesondere einer Vliesstoffbahn bestehend aus Fasern aus synthetisch erzeugten Polymeren oder industriell erzeugten, anorganischen Fasern, wie zum Beispiel Glas-, Metall-, Mineral-, Keramik- oder Kohlenstofffasern, umfassend ein Transportband für die Fasern, aus denen die Vliesstoffbahn hergestellt wird, sowie eine unter dem Transportband angeordnete Rüttelvorrichtung (10) nach einem der vorhergehenden Ansprüche.

6. Anlage nach Anspruch 5, ferner umfassend eine der Rüttelvorrichtung (10) prozesstechnisch nachgelagerte Vorrichtung zum Verbinden der Fasern untereinander.

7. Anlage nach Anspruch 5 oder 6, ferner umfassend einen Former zum Nasslegen der Fasern auf das Transportband.

8. Verfahren zur Herstellung einer Vliesstoffbahn, insbesondere einer Vliesstoffbahn bestehend aus Fasern aus synthetisch erzeugten Polymeren oder industriell erzeugten, anorganischen Fasern, wie zum Beispiel Glas-, Metall-, Mineral-, Keramik- oder Kohlenstofffasern, unter Verwendung einer Anlage nach einem der Ansprüche 5 bis 7, wobei die Fasern auf dem Transportband mittels der Rüttelvorrichtung (10) zumindest teilweise hinsichtlich ihrer Lage und/oder Orientierung neu ausgerichtet werden, **dadurch gekennzeichnet, dass** der Balken (12) im Wesentlichen nur in einer Richtung, nämlich der Richtung orthogonal zur Unterseite des Transportbandes, in Vibrationsbewegungen versetzt wird, wobei zwei mit dem Balken (12) verbundene Unwuchtmotoren (18) mit im Wesentlichen gleicher Frequenz, jedoch mit gegensinniger Drehrichtung angetrieben werden.

9. Verfahren nach Anspruch 8, **dadurch gekennzeichnet, dass** prozesstechnisch nach der Neuausrichtung der Fasern die Fasern miteinander verbunden werden, insbesondere ein Bindemittel derart erwärmt wird, dass es aushärtet, um die Fasern miteinander zu verbinden.

10. Verfahren nach einem der Ansprüche 8 bis 9, **dadurch gekennzeichnet, dass** die Vibrationsanregung des Balkens (12) verstellbar ist bzw. verstellt wird, vorzugsweise durch eine Veränderung der Drehzahl der Unwuchtmotoren (18) und/oder durch eine Positionsverstellung von den Unwuchtmotoren (18) zugeordneten Unwuchtgewichten.

## Claims

1. Vibrating device (10) for an installation for producing a nonwoven fabric web, which is configured to be positioned in the machine cross direction below a transport belt for fibres from which the nonwoven fabric web is produced, and to set in vibration the transport belt with the fibres transported thereon;
wherein the vibrating device (10) comprises a beam (12) of which the upper side is able to be at least temporarily brought into contact with a lower side of the transport belt, wherein the beam (12) is mounted in such a manner, and/or the beam is excited, or able to be excited, by the vibrating device only in such a manner, that said beam (12) does not substantially carry out, or permit, movements in the machine direction,
**characterized in that** the beam (12) is assigned a plurality of unbalance motors (18), wherein the beam (12) is assigned an even number of unbalance motors (18), and wherein two unbalance motors (18) are in each case able to be driven, or in each case driven, at substantially identical frequencies but in opposite rotation directions.

2. Vibrating device (10) according to Claim 1, **characterized in that** two unbalance motors (18) in terms of a longitudinal extent of the beam (12) in the machine cross direction are in each case disposed so as to be substantially symmetrical in relation to a centre of the beam (12).

3. Vibrating device (10) according to one of the preceding claims, **characterized in that** the beam (12) extends across the entire width of the transport belt.

4. Vibrating device according to one of Claims 1 or 2, **characterized in that** a plurality of beams (12), which conjointly extend across the entire width of the transport belt, are disposed behind one another.

5. Installation for producing a nonwoven fabric web, in particular a nonwoven fabric web composed of fibres of synthetically generated polymers or man-made inorganic fibres such as, for example, glass, metal, mineral, ceramic or carbon fibres, comprising a transport belt for the fibres from which the nonwoven fabric web is produced, as well as a vibrating device (10) according to one of the preceding claims, which is disposed below the transport belt.

6. Installation according to Claim 5, furthermore comprising a device for connecting the fibres to one another, which device in terms of the process is disposed downstream of the vibrating device (10).

7. Installation according to Claim 5 or 6, furthermore comprising a forming unit for wet laying the fibres onto the transport belt.

8. Method for producing a nonwoven fabric web, in particular a nonwoven fabric web composed of fibres of synthetically generated polymers or man-made inorganic fibres such as, for example, glass, metal, mineral, ceramic or carbon fibres, while using an installation according to one of Claims 5 to 7, wherein the fibres in terms of their position and/or orientation on the transport belt are at least partially re-aligned by means of the vibrating device (10), **characterized in that** the beam (12) is set in vibration substantially only in one direction, specifically the direction orthogonal to the lower side of the transport belt, wherein two unbalance motors (18) connected to the beam (12) are driven at substantially identical frequencies but in opposite rotation directions.

9. Method according to Claim 8, **characterized in that** in terms of the process the fibres are connected to one another after the re-alignment of the fibres, in particular a bonding agent being heated in such a manner that the latter cures in order to connect the fibres to one another.

10. Method according to one of Claims 8 to 9, **characterized in that** the vibration excitation of the beam (12) is adjustable, or is adjusted, preferably by varying the rotating speed of the unbalance motors (18) and/or by adjusting the position of counterweights assigned to the unbalance motors (18).

## Revendications

1. Dispositif vibrant (10) pour une installation permettant de produire une bande de non-tissé, lequel dispositif est réalisé pour être positionné dans la direction transversale de la machine en dessous d'une bande transporteuse pour des fibres à partir desquelles la bande de non-tissé est produite et pour mettre en vibrations la bande transporteuse avec les fibres transportées sur celle-ci,
le dispositif vibrant (10) comprenant une barre (12) dont le côté supérieur peut être amené au moins temporairement en contact avec un côté inférieur de la bande transporteuse, la barre (12) étant supportée et/ou la barre n'étant excitée ou ne pouvant être excitée par le dispositif vibrant que de telle sorte qu'elle n'effectue ou n'autorise sensiblement aucuns mouvements dans la direction de la machine, **caractérisé en ce que** plusieurs moteurs à balourd (18) sont associés à la barre (12), un nombre pair de moteurs à balourd (18) étant associé à la barre (12), et respectivement deux moteurs à balourd (18) pouvant être entraînés ou étant entraînés sensiblement à la même fréquence mais dans des sens de rotation opposés.

2. Dispositif vibrant (10) selon la revendication 1, **caractérisé en ce que** respectivement deux moteurs à balourd (18) sont disposés sensiblement symétriquement par rapport à un centre de la barre (12) par rapport à une étendue longitudinale de la barre (12) dans la direction transversale de la machine.

3. Dispositif vibrant (10) selon l'une des revendications précédentes, **caractérisé en ce que** la barre (12) s'étend sur toute la largeur de la bande transporteuse.

4. Dispositif vibrant selon l'une des revendications 1 ou 2, **caractérisé en ce que** plusieurs barres (12) sont disposées les unes derrière les autres, lesquelles s'étendent ensemble sur toute la largeur de la bande transporteuse.

5. Installation permettant de produire une bande de non-tissé, en particulier une bande de non-tissé constituée de fibres en polymères produits de manière synthétique ou de fibres inorganiques produites de manière industrielle, telles que par exemple des fibres de verre, métalliques, minérales, céramiques ou de carbone, comprenant une bande transporteuse pour les fibres à partir desquelles la bande de non-tissé est produite, ainsi qu'un dispositif vibrant (10), disposé en dessous de la bande transporteuse, selon l'une des revendications précédentes.

6. Installation selon la revendication 5, comprenant en outre un dispositif placé en aval du dispositif vibrant (10) en termes de technique des procédés pour relier les fibres les unes aux autres.

7. Installation selon la revendication 5 ou 6, comprenant en outre un mouleur pour le dépôt par voie humide des fibres sur la bande transporteuse.

8. Procédé permettant de produire une bande de non-tissé, en particulier une bande de non-tissé constituée de fibres en polymères produits de manière synthétique ou de fibres inorganiques produites de manière industrielle, telles que par exemple des fibres de verre, métalliques, minérales, céramiques ou de carbone, à l'aide d'une installation selon l'une des revendications 5 à 7, les fibres étant réalignées sur la bande transporteuse au moyen du dispositif vibrant (10) au moins partiellement en ce qui concerne leur position et/ou leur orientation, **caractérisé en ce que** la barre (12) n'est mise en mouvements vibratoires sensiblement que dans une direction, à savoir la direction orthogonale au côté inférieur de la bande transporteuse, deux moteurs à balourd (18) reliés à la barre (12) étant entraînés sensiblement à la même fréquence, mais dans des sens de rotation opposés.

9. Procédé selon la revendication 8, **caractérisé en ce qu'**en termes de technique des procédés, après le réalignement des fibres, les fibres sont reliées les unes aux autres, en particulier un liant est chauffé de telle sorte qu'il durcisse afin de relier les fibres les unes aux autres.

10. Procédé selon l'une des revendications 8 et 9, **caractérisé en ce que** l'excitation vibratoire de la barre (12) peut être réglée ou est réglée, de préférence par une modification du régime des moteurs à balourd (18) et/ou par un réglage de la position de masses de balourd associées aux moteurs à balourd (18).
